# EUROPEAN PATENT APPLICATION

(11) **EP 4 410 502 A1**
(43) Date of publication of application: **07.08.2024**
(21) Application number: 22876405.6
(22) Date of filing: 28.09.2022
(51) Int. Cl.: B25J 13/00, B25J 13/08

(54) **INFORMATION PROCESSING DEVICE, ROBOT CONTROLLER, INFORMATION PROCESSING SYSTEM, AND INFORMATION PROCESSING METHOD**

(30) Priority: 28.09.2021 JP 2021158478
(71) Applicant: Kyocera Corporation, Kyoto-shi Kyoto 612-8501 (JP)
(72) Inventor: TOMIIE, Norio, Kyoto-shi, Kyoto 612-8501 (JP)
(74) Representative: TBK
(86) International application number: PCT/JP2022/036317
(87) International publication number: WO 2023/054539

(57) **Abstract**

An information processing device includes a controller. The controller estimates a first control program to be executed by a first robot from at least one control program which includes a processing pattern for a robot and which is recorded in a memory. The controller acquires first environmental information indicating at least a portion of a work environment of the first robot. The controller estimates the first control program by estimating at least one candidate first processing pattern to be performed by the first robot on the basis of the first environmental information.

## Description

### CROSS-REFERENCE TO RELATED APPLICATIONS

This application claims priority based on Japanese Patent Application No. 2021-158478 (filed September 28, 2021), the entire disclosure of which is hereby incorporated by reference.

### TECHNICAL FIELD

The present disclosure relates to an information processing device, a robot controller, an information processing system, and an information processing method.

### BACKGROUND OF INVENTION

A known device in the related art causes a robot to perform a group of tasks even if instructions from a user are lacking (see Patent Literature 1 for example).

### CITATION LIST

### PATENT LITERATURE

Patent Literature 1: Japanese Unexamined Patent Application Publication No. 2021-30407

### SUMMARY

In an embodiment of the present disclosure, an information processing device includes a controller. The controller estimates a first control program to be executed by a first robot from at least one control program which includes a processing pattern for a robot and which is recorded in a memory. The controller acquires first environmental information indicating at least a portion of a work environment of the first robot. The controller and estimates the first control program by estimating at least one candidate first processing pattern to be performed by the first robot on the basis of the first environmental information.

In an embodiment of the present disclosure, a robot controller controls the first robot on the basis of the first control program outputted from the information processing device.

In an embodiment of the present disclosure, an information processing system includes the information processing device and a database connected to the information processing device, a control program for performing the processing pattern being recorded in the database.

In an embodiment of the present disclosure, an information processing method is executed by an information processing device that estimates a first control program to be executed by a first robot from at least one control program, including a processing pattern for a robot, recorded in the information processing device. The information processing method includes acquiring, by the information processing device, first environmental information indicating at least a portion of a work environment of the first robot. The information processing method includes estimating, by the information processing device, the first control program by estimating at least one candidate first processing pattern to be performed by the first robot on the basis of the first environmental information.

### BRIEF DESCRIPTION OF THE DRAWINGS

FIG. 1 is a schematic diagram illustrating a configuration example of a robot control system according to an embodiment.
FIG. 2 is a block diagram illustrating an example of the configuration of a robot control system according to an embodiment.
FIG. 3 is a diagram illustrating an example of a work environment image.
FIG. 4 is a table indicating an example of attribute information for objects located in a work environment.
FIG. 5 is a table indicating an example of program candidates extracted on the basis of a work environment image.
FIG. 6 is a flowchart illustrating an example of a procedure to associate a control program with past record information.
FIG. 7 is a flowchart illustrating an example of a procedure of an information processing method according to an embodiment.

### DESCRIPTION OF EMBODIMENTS

### (Overview of robot control system 100)

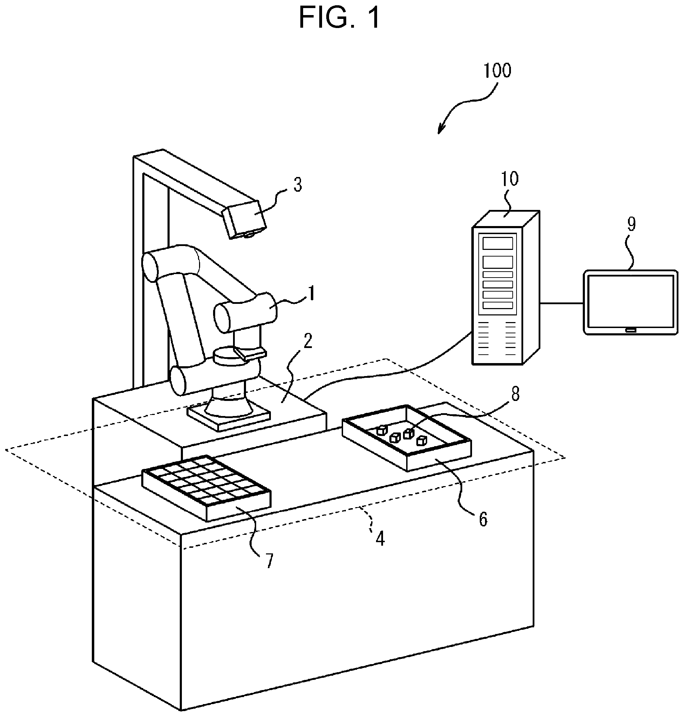

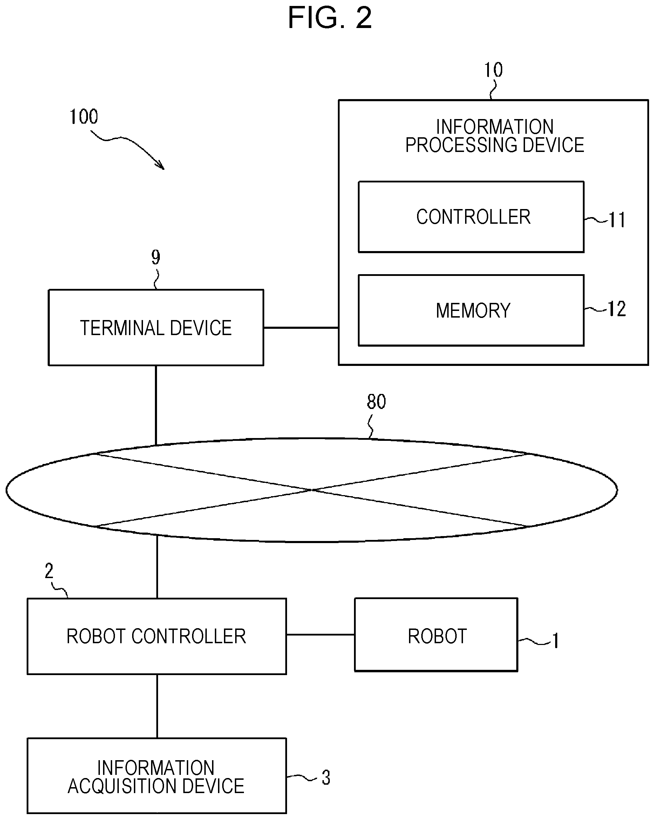

As illustrated in FIGs. 1 and 2, in one embodiment, a robot control system 100 includes a robot 1, a robot controller 2, an information acquisition device 3, a terminal device 9, and an information processing device 10. The robot control system 100 causes the robot 1 to perform tasks on objects placed on top of a workbench 5 located in a work environment 4. Specifically, for example, the robot 1 can move a workpiece 8 stored in a first tray 6 to a second tray 7.

A program to control the action of the robot 1 may be created as a user actually manipulates the robot 1, for example. A created program may be saved in the robot controller 2 or the information processing device 10. A program to control the action of the robot 1 is also referred to as a control program. Note that a control program may also be created using a robot simulator or the like. In this case, a control program may be created while not connected to a network (while offline), for example.

The robot 1 performs a task by acting according to a certain processing pattern. A processing pattern is represented, for example, as a combination of actions by which the robot 1 achieves a designated task. For example, a processing pattern may be represented as a combination of an action to grasp a workpiece 8, an action to convey the grasped workpiece 8, and an action to place the conveyed workpiece 8 in a certain position. A task is assumed to be a concept defining a goal to be achieved by performing a series of actions included in a processing pattern. As an example, a task may be a concept defining the goal of carrying a workpiece 8 from point A to point B. As another example, a task may be a concept defining the goal of placing a workpiece 8 at point C. As another example, a task may be a concept defining the goal of combining a workpiece 8 with another object. A processing pattern can be thought of as a combination of actions by which the robot 1 accomplishes a task. A control program can also be thought of as a group of commands causing the robot 1 to perform a combination of actions represented by a processing pattern so that the robot 1 can accomplish a task. In other words, a control program can be said to be software containing a programmed processing pattern for achieving a certain task. Note that a plurality of control programs may include control programs that each record different tasks to be performed on the same type of workpiece 8, or control programs that each record the same type of task to be performed on different types of workpieces 8. One type of task with respect to one type of workpiece 8 may also be programmed in a single control program.

When causing the robot 1 to perform a single task, a single control program corresponding to the task to be performed is prepared in advance. When causing the robot 1 to perform a plurality of tasks, a plurality of control programs corresponding to the tasks are prepared in advance. The user causes the robot 1 to perform a task by selecting a control program corresponding to the desired task that the robot 1 is to perform, and giving an instruction to the robot controller 2.

An increase in the number of control programs that have been prepared in advance may increase the burden on the user to select a control program. For example, the user may spend much time in searching for the control program corresponding to the desired task that the robot 1 is to perform. The user might also select the wrong control program.

As a comparative example, consider the case in which a robot controller estimates a workpiece present in the work environment on the basis of a captured image of the workpiece in the work environment, and estimates a task that a robot is to perform on the workpiece present in the work environment. However, according to the method of estimating a task as in the comparative example, when the possibility of performing a plurality of different tasks on the same workpiece exists, the robot controller 2 will have difficulty limiting the tasks to a single task. If the user has placed the wrong workpiece in the work environment, the task that the robot is to perform will be estimated on the basis of the incorrectly placed workpiece. In this case, a task that is different from the task that the user intended may be performed without giving the user the opportunity to notice the mistake.

In an embodiment according to the present disclosure, the information processing device 10 of the robot control system 100 acquires information about the work environment 4 through the information acquisition device 3. The information processing device 10 of the robot control system 100 compares the information about the work environment 4 with information associated with control programs stored in the information processing device 10 or the robot controller 2. From among the plurality of control programs, the information processing device 10 of the robot control system 100 extracts a control program for which information associated with the control program is similar to the information about the work environment 4. The information processing device 10 of the robot control system 100 extracts this control program as a candidate control program that the robot 1 is to perform. This arrangement may alleviate the burden on the user to select a control program. This arrangement may also lower the possibility of the user selecting the wrong control program.

According to the present disclosure, the information processing device 10 of the robot control system 100 determines the suitability of at least one candidate processing pattern to be performed by the robot 1 under control from at least one processing pattern of the robot 1 recorded in a memory 12 of the information processing device 10. This arrangement can improve the accuracy in selecting a control program, even when control programs for performing the same type of tasks are stored, such as stacking workpieces 8 in bulk and arranging workpieces 8 in the same orientation when conveying workpieces 8 to a target point, for example.

Note that the robot 1 under control is also referred to as the first robot simply for the sake of distinction. A processing pattern representing actions that the first robot is to perform is also referred to as the first processing pattern simply for the sake of distinction. A control program that the robot controller 2 executes to cause the first robot to perform the actions represented by the first processing pattern is also referred to as the first control program simply for the sake of distinction.

### (Example of configuration of robot control system 100)

As illustrated in FIGs. 1 and 2, in one embodiment, a robot control system 100 includes a robot 1, a robot controller 2, an information acquisition device 3, a terminal device 9, and an information processing device 10. At least one configuration portion of the robot control system 100 may be communicatively connected through a network 80, or may be communicatively connected without going through the network 80. At least one configuration portion of the robot control system 100 may be communicatively connected in a wired or wireless way. At least one configuration portion of the robot control system 100 may be communicatively connected through a dedicated channel. At least one configuration portion of the robot control system 100 is not limited to these examples, and may be communicatively interconnected in any of various other forms. The following describes the configurations of the robot control system 100 specifically.

### information processing device 10>

The information processing device 10 includes a controller 11 and a memory 12. The information processing device 10 is communicatively connected to other configuration portions of the robot control system 100 through the network 80, or directly without going through the network 80.

The controller 11 may include at least one processor to achieve various functions of the information processing device 10. The processor may execute a program to achieve the various functions of the information processing device 10. The processor may be achieved as a single integrated circuit. An integrated circuit is also referred to as an IC. The processor may be achieved as a plurality of communicatively connected integrated circuits and discrete circuits. The processor may include a central processing unit (CPU). The processor may include a digital signal processor (DSP) or a graphics processing unit (GPU). The processor may be achieved on the basis of any of various other known technologies.

The information processing device 10 further includes a memory 12. The memory 12 may include an electromagnetic storage medium such as a magnetic disk, or a memory such as semiconductor memory or magnetic memory. The memory 12 may be configured as a hard disk drive (HDD) or as a solid-state drive (SSD). The memory 12 stores various information, programs to be executed by the controller 11, and the like. The memory 12 may function as a working memory of the controller 11. At least a portion of the memory 12 may be included in the controller 11. At least a portion of the memory 12 may be configured as a storage device separate from the information processing device 10.

The information processing device 10 may include a communication device configured to communicate in a wired or wireless way. The communication device may be configured to communicate according to a communication scheme based on any of various communication standards.

The information processing device 10 may include one or more servers. The information processing device 10 may cause a plurality of servers to execute parallel processing. The information processing device 10 does not necessarily include a physical housing, and may also be configured on the basis of virtualization technology such as a virtual machine or a container orchestration system. The information processing device 10 may also be configured using a cloud service. When configured using a cloud service, the information processing device 10 may be configured by combining managed services. In other words, the functions of the information processing device 10 may be achieved as a cloud service.

The information processing device 10 may include at least one server cluster and at least one database cluster. The server cluster functions as the controller 11. The database cluster functions as the memory 12. One server cluster may be present. Two or more server clusters may also be present. In the case of one server cluster, the functions achieved by the one server cluster encompass the functions achieved by each server cluster. The server clusters are communicatively connected to each other in a wired or wireless way. One database cluster may be present. Two or more database clusters may also be present. The number of database clusters may be increased or decreased, as appropriate, on the basis of the volume of data to be managed by the information processing device 10 and the availability requirements of the information processing device 10. The database clusters are communicatively connected to the server clusters in a wired or wireless way. The information processing device 10 may also be connected to an external database. An information processing system including the information processing device 10 and the external database may also be configured.

The information processing device 10 is illustrated as a single configuration in FIGs. 1 and 2, but a plurality of configurations may be managed as a single system if necessary. In other words, the information processing device 10 is configured as a scalable platform. By using a plurality of configurations as the information processing device 10, even if one configuration becomes inoperable due to a natural disaster or other unforeseen event, the system will continue to operate using the other configuration(s). In this case, the plurality of configurations are interconnected by a wired and/or wireless channel and are capable of communicating with each other. The plurality of configurations may also be built across cloud and on-premises environments.

The information processing device 10 is communicatively connected to at least one configuration of the robot control system 100 by a wired and/or wireless channel. The information processing device 10 and the at least one configuration of the robot control system 100 are mutually equipped with interfaces using a standard protocol, allowing for bidirectional communication.

### <Terminal device 9>

The terminal device 9 is communicatively connected to at least one of the robot controller 2 or the information processing device 10 of the robot control system 100. Note that the terminal device 9 may also be communicatively connected to another configuration of the robot control system 100. The terminal device 9 and the at least one configuration of the robot control system 100 are communicatively connected through the network 80, or directly without going through the network 80.

The terminal device 9 may include at least one processor. The processor of the terminal device 9 may be the same and/or similar to the processor in the controller 11 of the information processing device 10. The terminal device 9 may include a storage device. The storage device of the terminal device 9 may be the same and/or similar to the memory 12 of the information processing device 10. The terminal device 9 may include a communication device. The communication device of the terminal device 9 may be the same and/or similar to the communication device of the information processing device 10.

The terminal device 9 may include an input device. The input device may include a touch panel or touch sensor, or a pointing device such as a mouse, for example. The input device may also include physical keys. The input device may also include a voice input device such as a microphone. The input device is not limited to these examples and may include any of various other devices.

The terminal device 9 may include an output device. The output device may include a display device. The display device may include a liquid crystal display (LCD), an organic electroluminescence (EL) display or inorganic EL display, a plasma display panel (PDP), or the like. The display device is not limited to these displays and may include any of various other types of displays. The display device may include a light-emitting device such as a light-emitting diode (LED). The display device may include any of various other devices. The output device may also include a speaker or other sound output device that outputs auditory information such as speech. The output device is not limited to these examples and may include any of various other devices.

The terminal device 9 included in the robot control system 100 is not limited to one, and may also number two or more. When the robot control system 100 includes a plurality of terminal devices 9, each terminal device 9 may accept input from a user. The terminal device 9 may be configured as a tablet terminal. The terminal device 9 may be configured as a mobile phone terminal such as a feature phone or a smartphone. The terminal device 9 may be configured as a personal computer (PC) terminal such as a desktop PC or a laptop PC. The terminal device 9 is not limited to these examples and may be configured as any of various devices capable of providing a graphical user interface (GUI) and a communication function.

The terminal device 9 may be used by a user to perform a task of storing a control program in the information processing device 10 in advance. The terminal device 9 may also be used to monitor the state of the robot 1. The terminal device 9 is not limited to these examples and can provide any of various other functions. The terminal device 9 may also be provided as part of the robot controller 2. When the terminal device 9 is provided as part of the robot controller 2, the robot controller 2 itself may include an input device or an output device. The robot controller 2 may also be included in the terminal device 9.

### <Robot controller 2>

The robot controller 2 downloads a control program from the information processing device 10. The robot controller 2 executes a downloaded control program, thereby outputting information for controlling the action of the robot 1 to the robot 1 and causing the robot 1 to perform a task specified by the control program. The robot controller 2 may also execute a control program that the robot controller 2 itself retains. As exemplified in FIG. 1, the robot controller 2 may cause the robot 1 to perform a task of moving a workpiece 8 from the first tray 6 to the second tray 7. The robot controller 2 may cause the robot 1 to perform any of various tasks not limited to the above. The robot controller 2 may or may not be connected to a cloud computing environment. When the robot controller 2 is not connected to a cloud computing environment, the action of the robot controller 2 is completed in the on-premises environment. When the action of the robot controller 2 is completed in the on-premises environment, the action of the information processing device 10 is executed by the robot controller 2.

The robot controller 2 may include a communication device that downloads a control program from the information processing device 10. The communication device of the robot controller 2 may be the same and/or similar to the communication device of the information processing device 10. The robot controller 2 may include a processor that generates information for controlling the action of the robot 1 by executing a control program. The processor of the robot controller 2 may be the same and/or similar to the processor in the controller 11 of the information processing device 10.

In the configuration exemplified in FIG. 1, one robot controller 2 is connected to one robot 1. One robot controller 2 may also be connected to two or more robots 1. One robot controller 2 may control only one robot 1, or may control two or more robots 1. The robot controllers 2 and robots 1 are not limited to two, and may also be number one, or number three or more. The robot controller 2 may also be unified with the information processing device 10 such that the function of the robot controller 2 is achieved as one function of the information processing device 10.

### <Robot 1>

The robot 1 may be configured as a robotic arm including an arm. The arm may be configured as a 6-axis or 7-axis vertical articulated robot, for example. The arm may also be configured as a 3-axis or 4-axis horizontal articulated robot, for example. The arm may also be configured as a 2-axis or 3-axis Cartesian robot. The arm may also be configured as a parallel link robot or the like. The number of axes forming the arm is not limited to the examples given.

The robot 1 may include an end effector attached to the arm. The end effector may include, for example, a grasping hand configured to grasp a work object. The grasping hand may have a plurality of fingers. The grasping hand may have two or more fingers. Each finger on the grasping hand may have one or more joints. The end effector may also include a suction hand configured to suction a work object. The end effector may also include a scooping hand configured to scoop up a work object. The end effector may also include a drill or other tool and may be configured to perform any of various machining actions, such as drilling a hole in a work object. The end effector is not limited to these examples and may be configured to perform any of various other actions.

The robot 1 can control the position of the end effector by actuating the arm. The end effector may have an axis that serves as a reference in the direction of action with respect to a work object. When the end effector has an axis, the robot 1 can control the direction of the end effector axis by actuating the arm. The robot 1 controls the start and end of an action to act on a work object. The robot 1 can move or machine a work object by controlling the action of the end effector while controlling the position of the end effector or the direction of the end effector axis.

The robot 1 may also be configured as an automated guided vehicle (AGV). The robot 1 may also be configured as a drone. The robot 1 is not limited to a robotic arm or AGV and may also be configured in any of various other forms, such as a vehicle, an electronic device, or a control machine.

The robot 1 may further include a sensor to detect the state of at least one configuration portion of the robot 1. The sensor may detect information about the real position or orientation of at least one configuration portion of the robot 1, or information about the velocity or acceleration of at least one configuration portion of the robot 1. The sensor may also detect a force acting on at least one configuration portion of the robot 1. The sensor may also detect a current flowing in, or the torque of, a motor used to drive at least one configuration portion of the robot 1. The sensor can detect information obtained as a result of an actual action by the robot 1. By acquiring a detection result from the sensor, the robot controller 2 can ascertain the result of an actual action by the robot 1.

Unlike a device that performs a certain task on a product and machines different types of products by being configured with conditions according to the type of product, the robot 1 is capable of generating a control program suited to a task, and can act to perform any of various tasks by generating control programs.

### information acquisition device 3>

The information acquisition device 3 acquires information about at least a portion of the work environment 4 of the robot 1. The information acquisition device 3 may include a camera to capture an image of at least a portion of the work environment 4. The information acquisition device 3 may include a sensor to measure the position, shape, or size of an object present in at least a portion of the work environment 4. The information acquisition device 3 may include a 3D sensor, a distance sensor, or the like. The information acquisition device 3 may include a sensor to measure the temperature, humidity, or the like of at least a portion of the work environment 4. When at least a portion of the work environment 4 is a cleanroom, the information acquisition device 3 may include a sensor to measure particle density inside the cleanroom. Information about at least a portion of the work environment 4 may also include cleanroom classification information. The information acquisition device 3 may include a sensor to measure noise in at least a portion of the work environment 4. The information acquisition device 3 may include a sensor such as a current sensor to measure a current or the like which indicates the running of peripheral equipment. The information acquisition device 3 may be fixed at a position allowing for the acquisition of information about at least a portion of the work environment 4 of the robot 1. The information acquisition device 3 may be attached to a robotic arm or an end effector. The information acquisition device 3 is not limited to one, and may also number two or more. A plurality of information acquisition devices 3 may be communicatively connected to each other. At least one among the plurality of information acquisition devices 3 may be communicatively connected to the robot controller 2 or the information processing device 10. The information acquisition device 3 may include a plurality of information acquisition units physically apart from each another. The plurality of information acquisition units may be communicatively connected to each other.

The information that the information acquisition device 3 acquires as information on at least a portion of the work environment 4 may also include information within a working range of the robot 1. The working range of the robot 1 may be a range containing the workbench 5 and any objects placed on the workbench 5, as exemplified in FIG. 1. The information that the information acquisition device 3 acquires as information on at least a portion of the work environment 4 may also include information different from the work object itself or the robot 1 itself. The information that the information acquisition device 3 acquires as information on at least a portion of the work environment 4 is not limited to the above information and may also include information outside the working range of the robot 1. Specifically, the information that the information acquisition device 3 acquires as information on at least a portion of the work environment 4 may include information about a range containing peripheral equipment. The peripheral equipment may include a parts feeder to place the workpiece 8 or a tray changer to place the first tray 6, the second tray 7, or the like. The peripheral equipment may include a workpiece reversing device to reverse the workpiece 8 front-to-back/back-to-front. The peripheral equipment may include a tool changer to exchange the end effector of the robot 1. The peripheral equipment may include a production device such as a grinder to machine the workpiece 8. The peripheral equipment is not limited to the above and may include any of various equipment. The information that the information acquisition device 3 acquires as information on at least a portion of the work environment 4 may also include information about a range not containing the workpiece 8. The information that the information acquisition device 3 acquires as information on at least a portion of the work environment 4 may include attribute information about the end effector of the robot 1 or attribute information about the arm. Attribute information about the end effector may include information specifying whether the end effector is a hand, a suction cup, or the like. Attribute information about the arm may include information specifying the number of joints or the movable range of the arm, or the length of the arm.

The range in which the information acquisition device 3 acquires information may be an action range of the robot 1. The range in which the information acquisition device 3 acquires information is not limited to the action range of the robot 1, and may also include a range outside or peripheral to the action range of the robot 1. The information acquisition device 3 may acquire information about a range outside or peripheral to the action range of the robot 1 as information about the work environment 4. The range peripheral to the action range may be a range within a certain distance from the action range. The certain distance may be set as the distance between two points inside the same factory building, the same room, or the same production line, for example. The peripheral equipment may include a conveyor belt that conveys the workpiece 8 or the like into the action range of the robot 1. The robot control system 100 may select a control program on the basis of the state of the workpiece 8 on the conveyor belt located outside the action range of the robot 1.

### (Example of action of robot control system 100)

The robot control system 100 may store in the information processing device 10 a control program (processing pattern) mapped to a program number, a program name, or a task name. The robot control system 100 maps, to a program name or the like, information about at least a portion of the work environment 4 where a control program is to be executed. In other words, a control program is mapped to information about at least a portion of the work environment 4 where the control program is to be executed. User-prepared information about at least a portion of the work environment 4 is also referred to as prepared environmental information or first environmental information. Information about at least a portion of the work environment 4 associated with a control program is information about at least a portion of the work environment 4 when the control program was recorded in the past, and is also referred to as past record information or second environmental information. Past record information or second environmental information corresponds to information about at least a portion of the work environment 4 when the robot 1 performed a task in response to the robot controller 2 executing a control program. Past record information or second environmental information may also include user-registered information about at least a portion of the work environment 4. In the robot control system 100, the terminal device 9 may be configured to accept user input to register information about at least a portion of the work environment 4. In other words, the robot control system 100 may associate information simulatively registered by a user with the number of the like of a control program (processing pattern). A user who can register past record information or second environmental information about the first robot may be, for example, a user who has caused the first robot to perform a task in the past, or a user of another robot. A user who can register past record information or second environmental information about the first robot may be someone such as an administrator or worker at a factory or the like.

Past record information may simply include information that can be compared to prepared environmental information. That is, past record information may simply include information corresponding to prepared environmental information. For example, if the prepared environmental information contains an image, the past record information may also contain an image. If the prepared environmental information contains sensor output or other numerical data, the past record information may also contain numerical data. Stated differently, prepared environmental information may also include information that can be compared to past record information.

Past record information may include an image of the work environment 4 captured when the control program is executed, for example. Past record information may include attribute information about an object present in the work environment 4. Attribute information may be obtained by analyzing an image of the work environment 4. Attribute information about an object may include information about the appearance of the object, such as the outline or other shape of the object, the color or texture of the object, or the size of the object. Attribute information about an object may include two-dimensional information captured in an image of the work environment 4, and may include three-dimensional information based on depth information about the work environment 4. Attribute information is not limited to information pertaining to the appearance of an object and may also include information about the material, density, or the like of the object. Past record information may include coordinates or other position information about an object present in the work environment 4. Position information may represent a relative position from a reference position set in the work environment 4. Position information may also represent an absolute position set in the information acquisition device 3. Position information may also represent a positional relationship of a plurality of objects in the vicinity of the robot 1. Position information may also represent a positional relationship of a plurality of objects present in the work environment 4. Position information may also represent a positional relationship between a workpiece 8 and an object in the vicinity of the workpiece 8. Past record information may include image capture conditions, such as the type of camera used to capture an image of the work environment 4, or the camera position, orientation, or the like.

As described above, the robot control system 100 stores a control program mapped to a program number or a program name in the information processing device 10, in association with past record information about the control program. Specifically, the robot control system 100 may store the following information in the information processing device 10.
(1) Program number
(2) Control program (processing pattern)
(3) Captured image of the work environment 4
(4) Attribute information and position information about an object recognized from the captured image of the work environment 4

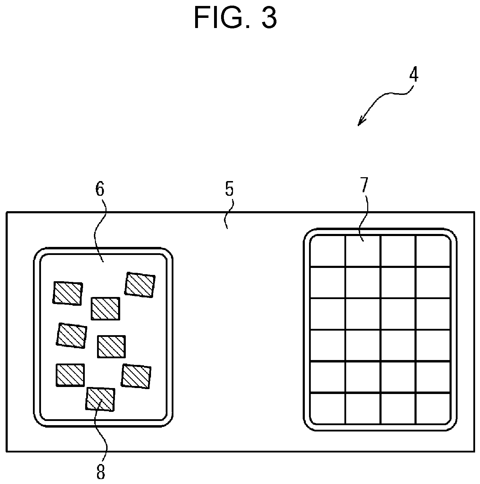

FIG. 3 illustrates an example of a captured image of the work environment 4. The workbench 5 is located in the work environment 4. The first tray 6 and the second tray 7 are located on top of the workbench 5. Workpieces 8 are stored in the first tray 6.

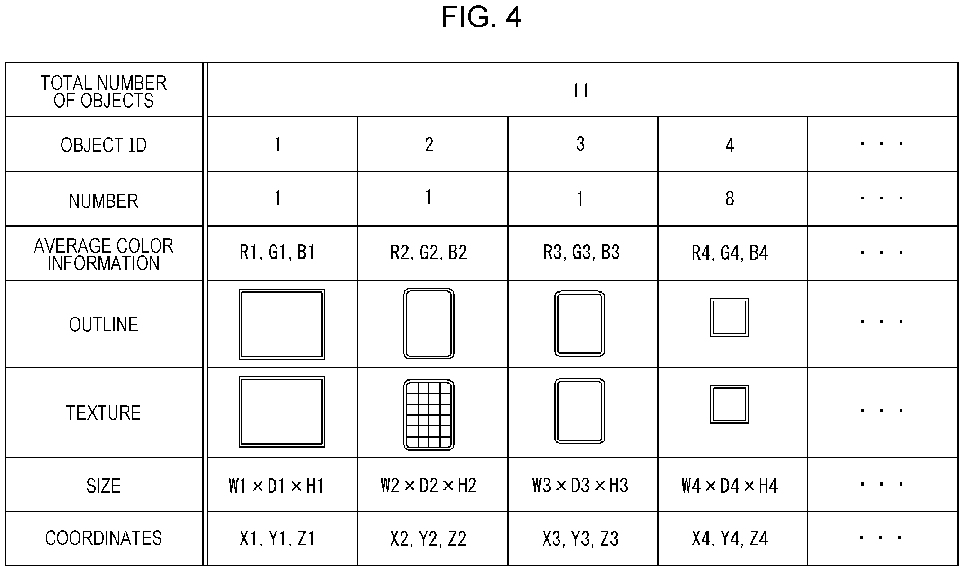

FIG. 4 illustrates an example of attribute information and position information about objects recognized from a captured image of the work environment 4. A total of 11 objects are recognized from the image. Four types of objects are present. To identify objects by type, an object ID numbered from 1 to 4 is assigned to each type. The workbench 5 is mapped to the number 1. The second tray 7 is mapped to the number 2. The first tray 6 is mapped to the number 3. The workpiece 8 is mapped to the number 4. One workbench 5, one first tray 6, and one second tray 7 are present. Eight workpieces 8 are present.

Color information about each object is represented as average color information obtained by averaging color information about each portion of an object. Color information is represented as numerical values corresponding to gradations of red, green, and blue (RGB) components of an image. The average color information about the workbench 5 (object ID = 1) is represented by (R1, G 1, B1). The average color information about the second tray 7 (object ID = 2) is represented by (R2, G2, B2). The average color information about the first tray 6 (object ID = 3) is represented by (R3, G3, B3). The average color information about the workpiece 8 (object ID = 4) is represented by (R4, G4, B4).

The outline and texture of each object is represented by an image of the object.

In this embodiment, the size of each object is assumed to be represented by the width (W) × depth (D) × height (H) of each object. The size of the workbench 5 (object ID = 1) is represented by W1×D1×H1. The size of the second tray 7 (object ID = 2) is represented by W2×D2×H2. The size of the first tray 6 (object ID = 3) is represented by W3×D3×H3. The size of the workpiece 8 (object ID = 4) is represented by W4×D4×H4.

The coordinates of each object may be represented by relative coordinates with respect to the coordinates of a reference position set in the work environment 4, or by absolute coordinates (for example, a pixel position in a captured image) set in the information acquisition device 3. In this embodiment, the coordinates are assumed to be represented by XYZ coordinates. The coordinates of the workbench 5 (object ID = 1) are represented by (X1, Y1, Z1). The coordinates of the second tray 7 (object ID = 2) are represented by (X2, Y2, Z2). The coordinates of the first tray 6 (object ID = 3) are represented by (X3, Y3, Z3). The coordinates of the workpiece 8 (object ID = 4) are represented by (X4, Y4, Z4).

### <Association with past record information at time of execution of control program>

The robot control system 100 stores a control program in the information processing device 10 in advance. When a control program is not associated with past record information at the time of execution of the control program, the robot control system 100 may acquire information about the work environment 4 at the time of execution of the control program. The robot control system 100 may associate the acquired information about the work environment 4 with the control program as past record information. For example, when a control program is executed for the first time, the robot control system 100 may acquire information about the work environment 4 thereof as past record information, and associate the past record information with the control program. The robot control system 100 can also be said to associate past record information with a task corresponding to a control program. Past record information may also include user-registered information about at least a portion of the work environment 4. In the robot control system 100, the terminal device 9 may be configured to accept user input to register information about at least a portion of the work environment 4. In other words, the robot control system 100 may associate information simulatively registered by a user with the number of the like of a robot control program (processing pattern). A user who can register past record information about the first robot may be, for example, a user who has caused the first robot to perform a task in the past, or a user of another robot. A user who can register past record information about the first robot may be someone such as an administrator or worker at a factory or the like.

A control program may be stored in the information processing device 10 in association with past record information according to the following procedure specifically.

In the robot control system 100, workpieces 8 and the like necessary for the robot 1 to perform a task are prepared as illustrated in FIG. 3. As an example, a user places the first tray 6 and the second tray 7 in the work environment 4. The user stores the workpieces 8 in the first tray 6. In other words, the user may place the workpieces 8 along with the first tray 6 and the second tray 7. As another example, peripheral equipment may place the workpieces 8 along with the first tray 6 and the second tray 7.

After preparing the workpieces 8 and the like in the work environment 4, the user uses the terminal device 9 to select a control program to be executed by the robot controller 2. The terminal device 9 outputs the selected control program to the robot controller 2. The robot controller 2 executes the acquired control program to thereby control the robot 1 and cause the robot 1 to perform a task.

When the robot 1 performs a task, the robot 1 or the robot controller 2 acquires information about the work environment 4 through the information acquisition device 3. For example, the information acquisition device 3 may capture an image of the work environment 4 and acquire the captured image of the work environment 4 as information about the work environment 4. When the information acquisition device 3 is attached to an arm or end effector of the robot 1, the robot 1 may move the information acquisition device 3 to a predetermined image capture position and cause the information acquisition device 3 to capture an image of the work environment 4. The information acquisition device 3 may acquire not only a captured image of the work environment 4 but also various information, such as depth information about the work environment 4, as information about the work environment 4.

The information acquisition device 3 outputs acquired information about the work environment 4 to the information processing device 10. The controller 11 of the information processing device 10 analyzes the information about the work environment 4 to recognize an object such as a workpiece 8 present in the work environment 4. For example, the controller 11 may recognize each of the workpieces 8, the first tray 6, and the second tray 7 through image analysis of a captured image of the work environment 4. For example, the controller 11 may recognize each of the workpieces 8, the first tray 6, and the second tray 7 by analyzing depth information about the work environment 4.

The controller 11 acquires attribute information and position information about each object recognized from the information about the work environment 4. The controller 11 associates attribute information and position information about each object with a control program stored in the memory 12 as past record information. As described above, a control program is stored in the information processing device 10 in association with past record information.

### <Execution of control program associated with past record information>

The robot control system 100 associates a control program with past record information. This makes possible the following procedure for easily selecting a control program to be used to cause the robot 1 to perform a task in a prepared work environment 4. The robot control system 100 can also be said to select a processing pattern corresponding to a control program.

In the robot control system 100, workpieces 8 and the like necessary for the robot 1 to perform a task are prepared as illustrated in FIG. 3. As an example, a user places the first tray 6 and the second tray 7 in the work environment 4. The user stores the workpieces 8 in the first tray 6. In other words, the user may place the workpieces 8 along with the first tray 6 and the second tray 7. As another example, peripheral equipment may place the workpieces 8 along with the first tray 6 and the second tray 7.

After preparing the workpieces 8 and the like in the work environment 4, the user uses the terminal device 9 to retrieve a control program to be executed by the robot controller 2. The robot control system 100 acquires information about the work environment 4 through the information acquisition device 3, on the basis of a control program retrieval instruction inputted into the terminal device 9. When the information acquisition device 3 is attached to an arm or end effector of the robot 1, the robot controller 2 controls the action of the robot 1 to move the information acquisition device 3 to a certain position or point the information acquisition device 3 in a certain direction to acquire information about the work environment 4.

The information acquisition device 3 outputs acquired information about the work environment 4 to the information processing device 10. The controller 11 of the information processing device 10 analyzes the information about the work environment 4 to recognize an object such as a workpiece 8 present in the work environment 4. For example, the controller 11 may recognize each of the workpieces 8, the first tray 6, and the second tray 7 through image analysis of a captured image of the work environment 4. For example, the controller 11 may recognize each of the workpieces 8, the first tray 6, and the second tray 7 by analyzing depth information about the work environment 4.

The controller 11 acquires attribute information and position information about each object recognized from the information about the work environment 4. The controller 11 compares the attribute information and position information about each object to past record information associated with control programs stored in the memory 12 of the information processing device 10. The controller 11 extracts a control program that conforms to the information about the work environment 4, and presents the extracted control program to the user through the terminal device 9. The controller 11 can be said to extract a processing pattern that conforms to the information about the work environment 4. The user inputs into the terminal device 9 an indication of whether to execute or refuse the presented control program. When a plurality of control programs are presented, the user may input into the terminal device 9 an instruction selecting a control program to be executed. When the control program to be executed is selected, the terminal device 9 outputs information specifying the selected control program to the robot controller 2. The robot controller 2 executes the selected control program and causes the robot 1 to perform a task.

### <<Extraction of control program based on similarity>>

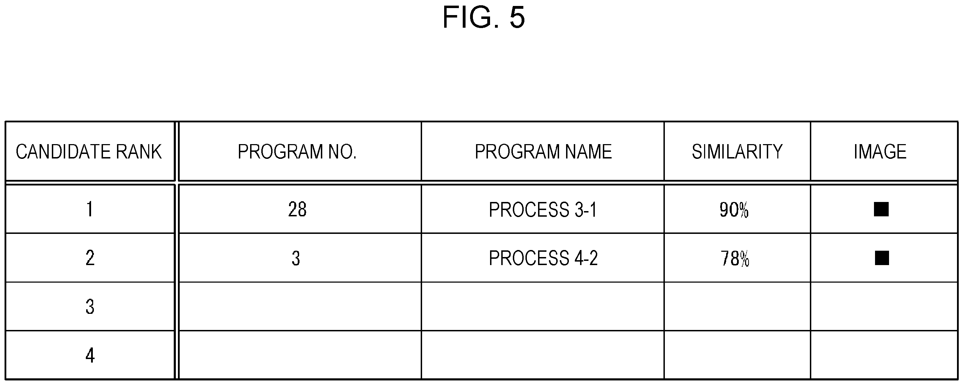

The controller 11 may compute a similarity between information about the work environment 4 and past record information to extract a control program or a processing pattern that conforms to the information about the work environment 4. The similarity is assumed to be computed such that the similarity is 100% when the two pieces of information are completely alike and 0% when the two pieces of information are completely unalike. The controller 11 may extract a highly similar control program or processing pattern as a candidate, and output the candidate to the terminal device 9 for presentation to the user. The controller 11 may also extract one or more control programs or processing patterns with a similarity equal to or greater than a certain value as one or more candidates, and output the one or more candidates to the terminal device 9 for presentation to the user. The controller 11 may also extract at least one candidate first processing pattern having a certain similarity, and output the at least one candidate first processing pattern to the terminal device 9 for presentation to the user. As illustrated in FIG. 5, for example, the controller 11 may also present to the user a list of control programs sorted in descending order of similarity. A control program with a higher similarity is displayed at a correspondingly higher candidate rank.

The controller 11 may compute the similarity as the similarity of attribute information such as the shape or color of objects present in the work environment 4. Specifically, the controller 11 compares attribute information about each object recognized from information about the work environment 4 to attribute information included in past record information associated with control programs stored in the information processing device 10. The controller 11 may compute the similarity as a numerical value by using template matching or a trained model generated by machine learning or deep learning. The controller 11 computes the similarity for each type of recognized object. The controller 11 computes the similarity for all types of recognized objects. Objects recognized in the work environment 4 exemplified in FIG. 3 are divided into four types. The controller 11 computes the similarity for each of the four types. The controller 11 calculates the mean and standard deviation of the four similarities computed for the types. When the mean is equal to or greater than a preset mean determination threshold value and the standard deviation is less than or equal to a preset standard deviation determination threshold value, the controller 11 extracts the control program associated with the past record information for which the similarities are computed. The mean determination threshold is set to 60, for example. The standard deviation determination threshold is set to 10, for example. Note that a trained model can be generated by machine learning using a training dataset containing data pertaining to a plurality of past record information.

The controller 11 may compute the similarity as the similarity of the positions of objects present in the work environment 4. Specifically, the controller 11 computes the distance between objects on the basis of position information about each object recognized from information about the work environment 4. The position information about each object is assumed to include center-of-gravity coordinates for each object. The position information about each object may also include edge coordinates for each object (for example, minimum and maximum values of the X, Y, and Z coordinates of the range in which each object is present). The controller 11 computes the distance between objects on the basis of the center-of-gravity coordinates for each object. In the work environment 4 exemplified in FIG. 3, the controller 11 computes the distance between each of the workbench 5 (object ID = 1), the second tray 7 (object ID = 2), the first tray 6 (object ID = 3), and the workpieces 8 (object ID = 4). In the example in FIG. 3, eight objects are classified into the same type as the workpieces 8 (object ID = 4). The controller 11 calculates center-of-gravity coordinates for a plurality of objects classified into the same type by considering the plurality of objects as one object, and computes the distance to other objects. When four types of objects are present in the work environment 4, there are six combinations for which to compute the distance between objects. Accordingly, six distances between objects are computed.

The controller 11 computes the distance between objects included in past record information on the basis of position information included in past record information associated with control programs stored in the information processing device 10. The controller 11 may compute the distance between objects for past record information that includes four types of objects. The controller 11 may also compute the distance between objects for past record information that includes an object corresponding to an object present in the work environment 4. In other words, the controller 11 may pre-extract past record information that conforms to attribute information about an object located in the work environment 4, and compute the distance between objects only for the extracted past record information.

The controller 11 compares the distance between objects recognized from information about the work environment 4 to the distance between objects in past record information associated with a control program. The controller 11 selects two objects from the objects recognized from the information about the work environment 4. From among the objects included in past record information, the controller 11 selects two objects that correspond to two objects selected from objects recognized from information about the work environment 4. The controller 11 computes the absolute value of the difference between the distance between two objects selected from objects recognized from information about the work environment 4 and two objects selected from objects included in past record information. For each of the distances calculated for the six combinations in the example in FIG. 3, the controller 11 computes the absolute value of the distance between two objects included in information about the work environment 4 and the distance between two objects included in past record information. The controller 11 computes the mean and the standard deviation of the absolute values of the differences between the distances computed for all combinations as the similarity of position. The controller 11 may assign a priority ranking in ascending order of the mean or the standard deviation to control programs associated with past record information for which the similarity of position is computed. The controller 11 may also assign a priority ranking in ascending order of the mean.

The controller 11 causes the terminal device 9 to display extracted control programs. As illustrated in FIG. 5, the controller 11 may cause the terminal device 9 to display extracted control programs with a priority ranking assigned. The user selects one control program from the control programs displayed by the terminal device 9. The terminal device 9 outputs to the robot controller 2 information specifying the control program selected according to selection input by the user. The robot controller 2 executes the selected control program and causes the robot 1 to perform a task.

A situation may occur in which the types of objects or the arrangement of objects present in the work environment 4 does not conform to any past record information preassociated with control programs. A situation may occur in which information about the work environment 4 and past record information do not conform because of a mistake in the preparation of the work environment 4. A mistake in the preparation of the work environment 4 may include, for example, the user forgetting to place the workpieces 8 or the like that are necessary for a task by the robot 1, or placing an extra object that is not used in a task by the robot 1. When all similarities computed for past record information are less than a certain value, the controller 11 may cause the terminal device 9 to display an alarm indicating that the work environment 4 is non-conforming. The controller 11 may also estimate the cause of the non-conformity of the work environment 4 and notify the user through the terminal device 9. For example, the controller 11 may notify the user that the cause of the non-conformity of the work environment 4 is an item with a similarity lower than a certain threshold value. Specifically, when the similarity of color information or shape information such as the outline of a workpiece 8 is less than a certain threshold value, the controller 11 may issue a notification indicating that, for instance, the workpiece 8 is wrong. When an object which is the same as, or similar to, an object in past record information has been prepared, but the placement of the object is different, the controller 11 may issue a notification indicating that, for instance, the placement of the object is wrong. When the prepared objects are too many or too few compared to objects in past record information, for example, the controller 11 may infer an object not in the past record information as an extra object, or infer an object not in the work environment 4 as a missing object. The controller 11 may also cause the terminal device 9 to display a result regarding the estimation of the cause of the non-conformity of the work environment 4, superimposed onto a captured image of the work environment 4.

### <Generation of control program suited to work environment 4>

To cause the robot 1 to perform a task in a work environment 4 in which the shape or the like of a work object has changed, the robot control system 100 may need to create a new control program corresponding to the changed work environment 4, even if the task details are the same. In this case, a control program may be created by editing an existing control program. The robot control system 100 is configured to create a control program to be executed in a prepared work environment 4 by editing a control program associated with past record information. The robot control system 100 can also be said to generate a new processing pattern corresponding to a control program by editing an existing processing pattern.

In the robot control system 100, workpieces 8 and the like necessary for the robot 1 to perform a task are assumed to be prepared as illustrated in FIG. 3. According to the procedure below, the robot control system 100 can create a new control program for causing the robot 1 to perform a task in a prepared work environment 4.

In a manner similar to the method to extract a control program associated with past record information described above, the robot control system 100 acquires information about the work environment 4, recognizes objects present in the work environment 4, and acquires attribute information and position information about each object. The robot control system 100 extracts a control program that conforms to the information about the work environment 4, and presents the extracted control program to the user through the terminal device 9. The user selects a control program to edit for the purpose of generating a control program by editing an existing control program. The control program to be generated corresponds to a desired task that the robot 1 is to perform in a prepared work environment 4. The user edits a control program at the terminal device 9. The terminal device 9 stores a control program newly generated by user editing in the memory 12 of the information processing device 10, in association with information about the work environment 4 as past record information. This procedure allows for easy creation of a new control program.

### (Example of procedure of information processing method)

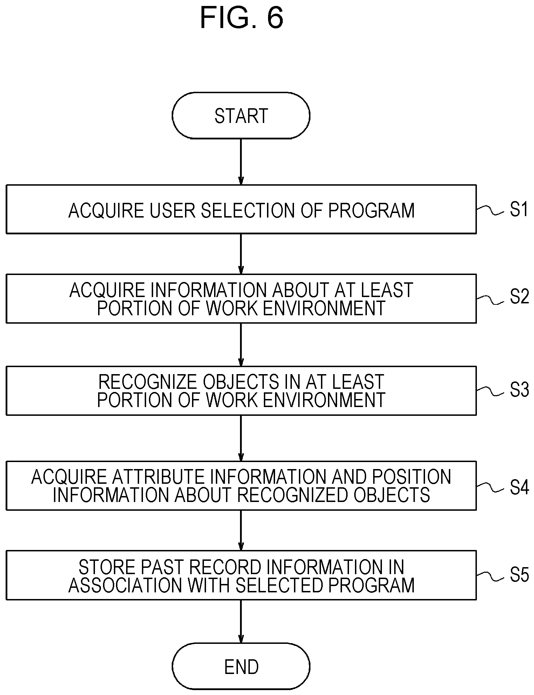

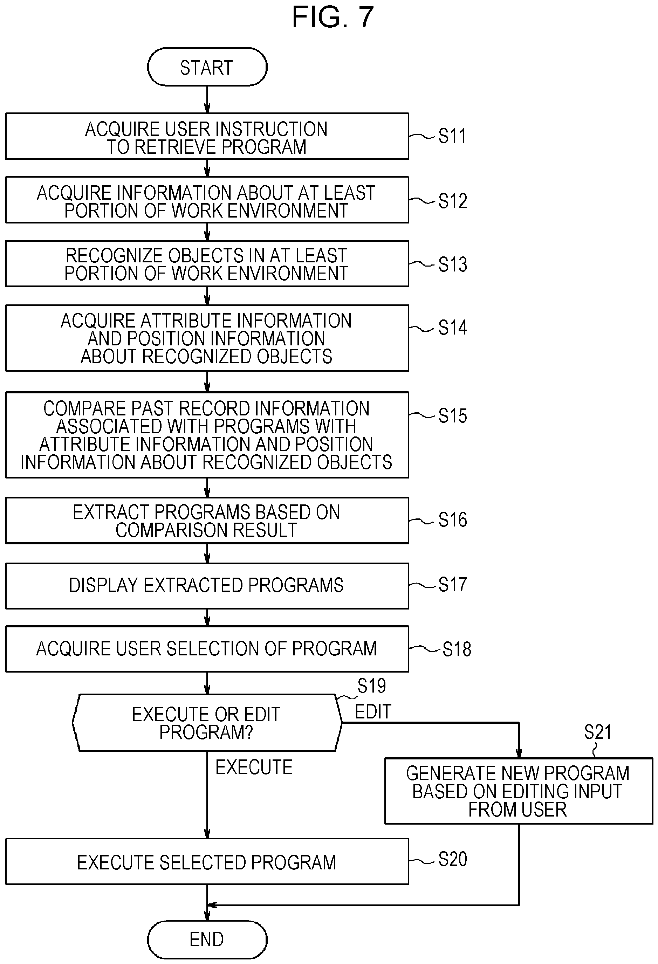

The robot control system 100 may execute an information processing method including the procedure of the flowchart exemplified in FIGs. 6 and 7. The information processing method may be achieved as an information processing program to be executed by a processor included in the controller 11 of the information processing device 10, the robot controller 2, or the terminal device 9. The information processing program may be stored in a non-transitory computer-readable medium.

The controller 11 may associate a control program with past record information by executing the procedure of the flowchart in FIG. 6. The controller 11 acquires the selection of a control program from the user (step S1). Specifically, the terminal device 9 accepts user input to select a control program. The controller 11 acquires the selection of a control program from the terminal device 9.

The controller 11 acquires information about at least a portion of the work environment 4 (step S2). Specifically, the information acquisition device 3 acquires a captured image of at least a portion of the work environment 4, depth information about at least a portion of the work environment 4, or the like as information about at least a portion of the work environment 4. The controller 11 acquires information about at least a portion of the work environment 4 through the information acquisition device 3.

The controller 11 recognizes objects in at least a portion of the work environment 4 (step S3). The controller 11 acquires attribute information and position information about recognized objects (step S4). The controller 11 stores past record information, including attribute information and position information about objects recognized in at least a portion of the work environment 4, in the memory 12 in association with the control program selected by the user (step S5). After executing the procedure in step S5, the controller 11 ends execution of the procedure of the flowchart in FIG. 6.

By executing the procedure of the flowchart in FIG. 7, the controller 11 may extract a control program associated with past record information similar to the work environment 4 so that the user can easily select a control program.

The controller 11 acquires a user instruction to retrieve a control program (step S11). Specifically, the terminal device 9 accepts user input giving an instruction to retrieve a control program. The controller 11 acquires, from the terminal device 9, the instruction to retrieve a control program.

The controller 11 acquires information about at least a portion of the work environment 4 (step S12). The controller 11 recognizes objects in at least a portion of the work environment 4 (step S13). The controller 11 acquires attribute information and position information about recognized objects (step S14).

The controller 11 compares past record information associated with control programs with the attribute information and position information about recognized objects (step S15). The controller 11 extracts control programs on the basis of a result of the comparison (step S16). Specifically, the controller 11 may compute a similarity between the past record information and the attribute information and position information about objects, and extract control programs on the basis of the similarity. The controller 11 may also extract control programs with a priority ranking assigned.

The controller 11 causes the terminal device 9 to display the extracted programs (step S17). The controller 11 acquires the selection of a control program from the user (step S 18). Specifically, the terminal device 9 accepts user input to select a control program. The controller 11 acquires the selection of a control program from the terminal device 9.

The controller 11 determines whether to execute or edit the selected control program (step S19). Specifically, the terminal device 9 accepts user input determining whether to execute the selected control program or generate a new control program by editing the selected control program. The controller 11 acquires, from the terminal device 9, information specifying whether to execute or edit the control program.

Upon acquiring from the terminal device 9 information specifying to execute the control program, the controller 11 determines to execute the selected control program (step S19: "Execute"), and causes the robot controller 2 to execute the selected control program (step S20). After executing the procedure in step S20, the controller 11 ends execution of the procedure of the flowchart in FIG. 7.

Upon acquiring from the terminal device 9 information specifying to edit the control program, the controller 11 determines to edit the control program (step S 19: "Edit"), and generates a new control program on the basis of editing input from the user (step S21). Specifically, the terminal device 9 accepts user input of editing details regarding the control program, and outputs the editing details to the information processing device 10. The controller 11 edits the control program on the basis of the input of editing details acquired from the terminal device 9, and generates and stores a new control program in the memory 12. After executing the procedure in step S21, the controller 11 ends execution of the procedure of the flowchart in FIG. 7.

### (Summary)

As described above, according to the robot control system 100, information processing device 10, and information processing method as in this embodiment, candidate control programs to be executed are extracted on the basis of a prepared work environment 4. Extracting candidates facilitates the selection of a control program by the user. This reduces the likelihood of the user selecting the wrong control program. The result may be a reduced burden on the user.

When the user selects a task to cause the robot 1 to perform a processing pattern to complete the selected task, a plurality of different work environments 4 for the selected task may exist. For example, the same type of task may have different optimal processing patterns depending on production line idiosyncrasies or the like. In this case, selecting the processing pattern to be performed by the robot 1 is difficult. According to this embodiment, the processing pattern itself is discriminated to extract candidate control programs, thereby enabling the user to easily select a control program corresponding to the processing pattern. This reduces the likelihood of the user selecting the wrong control program. The result may be a reduced burden on the user.

This embodiment allows for estimation of idiosyncrasies of a previous process on a production line, including idiosyncrasies such as placement habits by the user when the user places a workpiece 8 or the like in the work environment 4. A result of the estimation may be used as a basis for selecting a control program corresponding to a processing pattern required to complete a task. Executing the selected control program enables the robot 1 to complete the task on the basis of the estimation result.

Even if the task details are the same, the processing pattern required to complete the task is not necessarily the same. For example, various forms of aligning the workpieces 8, such as stacking the workpieces 8 in bulk or aligning the workpieces 8 in the same orientation, may be selected to conform to the next process. According to this embodiment, a candidate control program may be extracted according to differences in processing patterns.

The efficiency when using the robot 1 may be improved. The efficiency of cooperative tasks involving the robot 1 may be improved. Cooperative tasks include tasks performed by a human and the robot 1 working together, tasks performed by robots 1 working together, or tasks performed by the robot 1 and another machine working together. Cooperative tasks include collaborative tasks performed by a human and the robot 1 working together.

### (Other embodiments)

In this embodiment, the robot control system 100 may be deployed at industrial sites for industrial products, food processing sites where foodstuffs are handled, or sites where cosmetics or pharmaceuticals are produced.

In this embodiment, the robot control system 100 may be used to control a communication robot, service robot, or other robot 1 that interacts with users. For example, when the robot 1 has a camera or other information acquisition device 3, the robot control system 100 may extract a control program on the basis of a result of recognizing the face of a user with whom to interact or provide a service. The robot control system 100 may be applied to cases such as when the control program needs to be changed in response to a change of circumstances, such as when the user is wearing glasses or a mask, for example.

In this embodiment, the robot control system 100 computes a similarity for comparing information about at least a portion of a work environment 4 prepared by a user (prepared environmental information or first environmental information) with past record information associated with a control program. The robot control system 100 displays at least one control program in descending order of candidate likelihood. The robot control system 100 is not limited to similarity and may also compute another indicator. For example, the robot control system 100 may acquire information via the robot controller 2, the terminal device 9, the information acquisition device 3, or the like, such as attribute information about the robot 1 that the user is expected to use, information about the user who is expected to use the robot 1, or information about a recognized work object or the like expected to be involved in a task. The robot control system 100 may compute an indicator, referred to as a degree of association, for extracting a control program that is executed frequently in a certain period or a control program that a specific user executes frequently with respect to the robot 1 that the user is expected to use, a robot of the same type as the robot 1 expected to be used, or a work object expected to be involved in a task, for example. The controller 11 of the information processing device 10 may, for example, compute the degree of association so that a high priority ranking is given to a control program that has been executed frequently in a certain period going back from the present. The controller 11 may compute the degree of association so that a high priority ranking is given to the most recently executed control program. The controller 11 may compute the degree of association so that a high priority ranking is given to the control program most recently executed by, or a control program executed by, the user who is preparing the work environment 4 to cause the robot 1 to perform a task. The controller 11 may extract a control program on the basis of the value of the computed similarity or indicator such as the degree of association. The controller 11 may store the value of the computed similarity or indicator such as the degree of association in the memory 12. The controller 11 may also set an indicator combining the computed similarity and a plurality of indicators such as the degree of association. The controller 11 may compute the value of an indicator combining the similarity and the degree of association, and extract a control program on the basis of the computed value. The controller 11 may compute the value of an indicator combining the similarity and a plurality of indicators such as the degree of association, and extract a control program on the basis of the computed value. The controller 11 may compute the value of an indicator combining three or more indicators, and extract a control program on the basis of the computed value.

When information about the work environment 4 prepared by a user is newly associated with a control program as past record information, the controller 11 may compare the information about the work environment 4 prepared by the user with the past record information already associated with the control program. If the information about the work environment 4 prepared by the user does not match the past record information already associated with the control program, the controller 11 may record the information about the work environment 4 prepared by the user in association with the control program as past record information. If the similarity between the information about the work environment 4 prepared by the user and the past record information already associated with the control program is less than a certain value, the controller 11 may record the information about the work environment 4 prepared by the user in association with the control program as past record information. Note that a comparison between new past record information and existing past record information may also be executed when triggered by user selection of a control program to be executed by the robot.

The method of associating information about the work environment 4 with a robot control processing pattern as past record information may involve template matching or involve using the information about the work environment 4 to retrain a trained model of past record information generated by machine learning or deep learning.

The controller 11 may create a new robot control processing pattern on the basis of at least one candidate robot control processing pattern and externally entered input information. The controller 11 may extract a candidate from among robot control processing patterns stored in the memory 12. The extracted candidate may be the robot control processing pattern associated with the past record information that is most similar to the information about the work environment 4 prepared by the user. The controller 11 may create a new robot control processing pattern by obtaining information about editing details entered into the terminal device 9 by the user as externally entered input information.

The foregoing describes embodiments of the robot control system 100, but in the present disclosure, an embodiment may also be achieved as a method or program for implementing a system or device, or as a storage medium (such as an optical disc, magnetooptical disc, CD-ROM, CD-R, CD-RW, magnetic tape, hard disk, or memory card, for example) in which a program is recorded. The program may be stored in a non-transitory computer-readable medium.

An embodiment in the form of a program is not limited to an application program such as object code compiled by a compiler or program code to be executed by an interpreter, and may also be in a form such as a program module incorporated into an operating system. The program may or may not be configured so that all processing is performed solely in a CPU on a control board. The program may also be configured to be implemented, in part or in full, by another processing unit mounted on an expansion board or expansion unit added to the board as needed.

The foregoing description of embodiments according to the present disclosure is based on the drawings and examples, but note that a person skilled in the art could make various variations or revisions on the basis of the present disclosure. Consequently, it should be understood that these variations or revisions are included in the scope of the present disclosure. For example, the functions and the like included in at least one configuration portion or the like may be rearranged in logically non-contradictory ways. A plurality of component portions or the like may be combined into one, or a component portion or the like may be subdivided.

In the present disclosure, all constituent features described herein and/or all methods or all steps of processes disclosed herein can be combined in any combinations, except for combinations in which these features would be mutually exclusive. Each of the features described in the present disclosure can be replaced by alternative features that work for the same, equivalent, or similar purposes, unless explicitly denied. Therefore, unless explicitly denied, each of the disclosed features is merely one example of a comprehensive series of same or equal features.

An embodiment according to the present disclosure is not limited to any of the specific configurations of the embodiments described above. In the present disclosure, embodiments can be extended to all novel features described herein or combinations thereof, or to all novel methods or processing steps described herein or combinations thereof.

In the present disclosure, qualifiers such as "first" and "second" are identifiers for distinguishing configurations. The numerals denoting the configurations distinguished by qualifiers such as "first" and "second" in the present disclosure are interchangeable. For example, the identifiers "first" and "second" may be interchanged between the first tray 6 and the second tray 7. The identifiers are interchanged at the same time. The configurations are still distinguished after the interchange of the identifiers. The identifiers may be removed. The configurations with the identifiers removed therefrom are distinguished by signs. The description of identifiers such as "first" and "second" in the present disclosure shall not be used as a basis for interpreting the order of the configurations or the existence of identifiers with smaller numbers.

### REFERENCE SIGNS

100 robot control system (1: robot, 2: robot controller, 3: information acquisition device, 4: work environment, 5: workbench, 6: first tray, 7: second tray, 8: workpiece)
9 terminal device
10 information processing device (11: controller, 12: memory)
80 network

## Claims

1. An information processing device comprising:
a controller that estimates a first control program to be executed by a first robot from at least one control program which includes a processing pattern for a robot and which is recorded in a memory, wherein
the controller is configured to
acquire first environmental information indicating at least a portion of a work environment of the first robot, and
estimate the first control program by estimating at least one candidate first processing pattern to be performed by the first robot on the basis of the first environmental information.

2. The information processing device according to claim 1, wherein
the first environmental information includes information related to a positional relationship of a plurality of objects in the vicinity of the first robot.

3. The information processing device according to claim 2, wherein
the plurality of objects include peripheral equipment disposed in the vicinity of the first robot.

4. The information processing device according to claim 2 or 3, wherein
the first environmental information includes information related to a positional relationship between a workpiece and an object in the vicinity of the workpiece.

5. The information processing device according to any one of claims 1 to 4, wherein
the first environmental information includes attribute information about an object in the vicinity of the first robot.

6. The information processing device according to any one of claims 1 to 5, wherein
the first environmental information includes information about a range in which the first robot is to perform a task or a range within a certain distance around the range in which the first robot is to perform a task.

7. The information processing device according to any one of claims 1 to 6, wherein
the controller is configured to
acquire at least one piece of second environmental information, the second environmental information being information about a work environment recorded in the past with respect to the at least one control program, and
estimate the candidate first processing pattern on the basis of the at least one piece of second environmental information and the first environmental information.

8. The information processing device according to any one of claims 1 to 7, wherein
the controller is configured to
compare the first environmental information to each of the at least one piece of second environmental information, and
extract at least one candidate first processing pattern having a certain similarity on the basis of a result of the comparison.

9. The information processing device according to claim 8, wherein
the controller is configured to output a control program selected from among at least one control program including the candidate first processing pattern as a first control program to be executed by the first robot.

10. The information processing device according to claim 9, wherein
the controller is configured such that when the second environmental information of the control program selected from among the at least one control program including the candidate first processing pattern does not match the first environmental information, the controller causes the memory to record the first control program and the first environmental information in association with each other.

11. The information processing device according to claim 9 or 10, wherein
the controller is configured to create the first control program on the basis of the at least one candidate first processing pattern and externally entered input information.

12. A robot controller that controls the first robot on the basis of the first control program outputted from the information processing device according to any one of claims 1 to 11.

13. An information processing system comprising the information processing device according to any one of claims 1 to 11 and a database connected to the information processing device, a control program for performing the processing pattern being recorded in the database.

14. An information processing method comprising:
acquiring, by an information processing device that estimates a first control program to be executed by a first robot from at least one control program which includes a processing pattern for a robot and which is recorded in the information processing device, first environmental information indicating at least a portion of a work environment of the first robot; and
estimating, by the information processing device, the first control program by estimating at least one candidate first processing pattern to be performed by the first robot on the basis of the first environmental information.
